# EUROPÄISCHE PATENTSCHRIFT

(11) **EP 2 087 244 B1**
(45) Veröffentlichungstag und Bekanntmachung des Hinweises auf die Patenterteilung: **20.04.2011**
(21) Anmeldenummer: 07817719.3
(22) Anmeldetag: 23.10.2007
(51) Int. Cl.: F16B 7/04, F16B 7/14

(54) **VERBINDUNGSSYSTEM ZWISCHEN PROFILROHREN ÜBER KNOTENELEMENTE**
SYSTEM OF CONNECTION BEWTEEN PROFILED TUBES VIA NODE ELEMENTS
SYSTÈME D'ASSEMBLAGE ENTRE DES TUBES PROFILÉS AU MOYEN D'ÉLÉMENTS NODAUX

(30) Priorität: 23.10.2006 DE 102006050294
(43) Veröffentlichungstag der Anmeldung: 12.08.2009
(73) Patentinhaber: Reinhard AG Sachseln, 6072 Sascseln (CH)
(72) Erfinder: GUGELBERGER, Benjamin, 79780 Stühlingen (DE)
(74) Vertreter: Rasch, Michael
(86) Internationale Anmeldenummer: PCT/DE2007/001885
(87) Internationale Veröffentlichungsnummer: WO 2008/049399

(56) Entgegenhaltungen:
- DE-C1- 10 210 885
- GB-A- 396 867
- GB-A- 1 439 473

## Beschreibung

Die Erfindung betrifft ein Verbindungssystem zwischen Profilrohren über Knotenelemente mit Kupplungselementen zum lösbaren Verbinden der Profilrohre mit den Knotenelementen, wobei die aufeinander abgestimmten zapfenförmigen bzw. bohrungsförmigen Kupplungselemente ineinander gefügt werden können und mit einer Drehbewegung gleichzeitig beidendig kraftschlüssig miteinander verbindbar sind.

Ein derartiges Verbindungssystem ist für Rohrkonstruktionen aus der DE 102 10 885 C2 bekannt. Dieses Dokument offenbart insbesondere ein Verbindungssystem zwischen Profilrohren über Knotenelemente, mit Kupplungselementen zum lösbaren Verbinden der Profilrohre mit den Knotenelementen, wobei die aufeinander abgestimmten zapfenförmigen bzw. bohrungsförmigen Kupplungselemente ineinander fügbar sind und mit einer Drehbewegung gleichzeitig beidendig eines Profilrohres kraftschlüssig mit einem Knotenelement verbindbar sind, wobei die zapfenförmigen Kupplungselemente jeweils ein endseitig in die Profilrohre einsteckbares Einsatzteil und zwei sich daran anschließende Kontaktbereiche umfassen. Das Verbinden der Rohre mit den Knotenelementen erfolgt hier mittels ineinander greifender, von der reinen Zylinderform abweichender Kontaktflächen. Als derartige Kontaktflächen können beispielsweise Zapfen und Bohrungen mit elliptischem Querschnitt dienen, wobei der große Durchmesser des Zapfens größer ist als der kleine Durchmesser der Bohrung. Beim Verdrehen der beiden Bauteile gegeneinander kommen Teile ihrer Umfangsflächen in selbsthemmenden, lösbaren Reibschluss und halten so die beiden Bauteile fest, aber auch durch Zurückdrehen wieder lösbar zusammen.

Die den Rohren zugeordneten Kontaktflächen sind an gesonderte Einsatzteile verlegt, die in die hohlen Profile der Rohre einpressbar sind.

Um die Rohre in den Knotenelementen bis zum Reibschluss in bestimmtem Drehwinkel verdrehen zu können, müssen die Einsatzteile oder die Knotenelemente Elastizität aufweisen. Es ist versucht worden, die Einsatzteile aus Kunststoff zu fertigen, der eine gewisse Elastizität aufweist. Es hat sich jedoch gezeigt, dass auch durch Glasfasern verstärkter Kunststoff "kriecht", also im Laufe der Zeit oder bei bestimmter Belastung nachgibt und sich die Verbindung zwischen Rohr und Knotenelement lockert oder löst.

Es ist beispielsweise aus der CH 436 855 bekannt, Kupplungselemente mit teilweise geschlitzten Zapfen zu verwenden, wobei Rollstifte in den Schlitzen eingesetzt sind, um ein elastisches Nachgeben der Zapfen zu ermöglichen. Bei derartigen teilgeschlitzten Zapfen tritt der Nachteil auf, dass die Federwirkung der Zapfen zum Ende der Schlitze hin nachlässt, dort der Querschnitt also immer starrer wird. Unter Berücksichtigung von Fertigungstoleranzen muss daher im Zapfen ein gewisses Spiel vorgesehen sein, er muss also vorne Übermaß besitzen und klemmt auch nur dort. Eine solche Verbindung wackelt zwangsläufig, es sei denn, die Einstecktiefe ist besonders groß, was sehr sperrige Knotenelmente bedeuten würde.

Die GB-A-1 439 473 und die GB-A- 396 867 offenbaren ähnliche Kupplungselemente.

Bei diesem vorbekannten Verbindungssystem sind die Kupplungselemente 4 Bestandteile von Einsätzen 16, die in Profilrohre 1 eingepresst sind (D1: Spalte 4, Zeile 5) und über die Kupplungsflächen mit Knotenelementen 2 in Eingriff gebracht werden. Die Einsätze sind also massiv und mit den Profilrohren verpresst.

Hiervon ausgehend liegt der Erfindung die Aufgabe zugrunde, eine auch über längere Zeit und bei ausnahmsweise hoher Belastung und bei Rüttelbewegung sichere und sich nicht lösende Verbindung zwischen Knotenelementen und Rohren bzw. deren Einsatzteilen bereitzustellen, die gleichzeitig kompakt ist und trotzdem eine feste, nicht wackelnde Verbindung ermöglicht.

Diese Aufgabe wird durch die im Kennzeichen des Patentanspruchs 1 aufgeführten Merkmale gelöst.

Der Vorteil der Erfindung besteht darin, dass einerseits eine einfache, weitgehend unlösbare (weil verpresste) Verbindbarkeit zwischen Kupplungselement und Profilrohr erreichbar ist und trotzdem eine federnde Bewegbarkeit der Kontaktbereich gegeben ist. Ferner ist aufgrund der Erstreckung des Gelenkpunktes über der gesamten axialen Länge des Einsatzes sichergestellt, dass das kleinere Einsatzteil und der daran angeformte zweite Kontaktbereich nur in der vorgegebenen Richtung federt, also ein verkantendes Federn nur des Kontaktbereiches weitgehend vermieden wird.

Bevorzugt ist vorgesehen, dass die beiden Hälften des Einsatzteiles durch einen schmalen Steg miteinander verbunden bleiben. Damit wird der Vorteil erreicht, dass das Einsatzteil einstückig bleibt, leichter montierbar ist und seine beiden Hälften sich nicht axial gegeneinander verschieben können. Bevorzugt ist vorgesehen, hierfür eine Art Filmscharnier zwischen den beiden Einsatzteil-Bereichen vorzusehen.

Als Material für die Kupplungselemente ist vorzugsweise Metall vorgesehen. Es können jedoch auch andere geeignete starre Materialien wie Keramik oder hochfeste und verstärkte Kunststoffe verwendet werden. Es ist möglich, die Einsatzteile spanabhebend zu formen. Bevorzugt ist aber vorgesehen, zur Fertigung ein Urformverfahren wie Druckguss, Spritzguss sowie Pulversintern oder ein spanloses Umformverfahren wie Schmieden oder Tiefziehen einzusetzen. Da die Art der Verbindung keinen Hinterschnitt erfordert, ist dies ohne weiteres möglich. Als hierfür besonders geeignet empfiehlt sich insbesondere Zinkdruckguss.

Für das im zapfenförmigen Kupplungselement angeordnete Federelement ist ein dauerelastischer Werkstoff vorgesehen. Dies kann in erster Linie Stahl sein, es kommen jedoch auch andere dauerelastische Werkstoffe wie Berylliumbronze oder ein Elastomer wie Polyurethan in Frage. Ferner ist vorgesehen, das Stahlblech zu einem zylindrischen Rollstift zu rollen und diesen in eine zylindrische Ausnehmung im Schlitz einzupressen. Ein derartiger Rollstift weist die Elastizität auf, die für die Annäherung der beiden gegeneinander verlagerbaren Einsatzteil-Bereiche erforderlich ist.

Bevorzugt ist vorgesehen, die Kupplungsglieder der Verbindung mit aneinander aufgleitenden (ineinander greifenden), von der reinen Zylinderform abweichenden Kontaktflächen auszustatten, die durch gegensinniges Verdrehen in selbsthemmenden Reibschluss kommen.

Die vorliegende Erfindung ist nicht auf die eingangs erwähnte Rohrkonstruktion beschränkt, die auf ein Regalsystem abgestellt ist. Vielmehr können durch die erfindungsgemäße Verbindung beliebige und beliebig geformte Bauteile fest und wieder lösbar miteinander verbunden werden. Die Erfindung ist ferner nicht auf ihre Anwendung an Profilrohren beschränkt, es versteht sich, dass sie auch an massiven Profilstangen verwirklicht werden kann. Wenn daher von Profilrohren gesprochen wird, sollen damit immer auch Profilstangen umfasst sein.

Ein Vorteil dieser Verbindungsart ist, dass die Teile in maschineller Montage durch entsprechende Kraft auch axial gefügt, aber doch durch Drehen von Hand demontiert werden können.

In den Figuren der Zeichnung sind Ausführungsbeispiele der Erfindung schematisch dargestellt. Es zeigen
- Fig. 1:: einen Ausschnitt aus einem teilweise montierten Ver- bindungssystem aus Profilrohren und Knotenelementen;
- Fig. 2:: ein teilweise geschnittenes Profilrohr mit Einsätzen an beiden Enden;
- Fig. 3:: die Stirnansicht eines Knotenelementes mit von der reinen Kreisform abweichender, elliptischer Bohrung mit eingreifendem Zapfen;
- Fig. 4:: die Stirnansicht eines Knotenelementes mit Bohrung anderer Form in Darstellung wie in Fig. 2;
- Fig. 5:: die Stirnansicht eines weiteren Knotenelements in Darstellung wie in Fig. 2;
- Fig. 6 und 8:: Stirnansichten von zwei Ausführungsformen von Einsatzteilen in einem Profilrohr;
- Fig. 7 und 9:: Längsschnitte durch die Einsatzteile der vorher genannten Figuren in Ebene A-A;
- Fig. 10:: je 2 Ansichten von 2 Ausführungen des Rollstiftes.

Die Erfindung wird im folgenden in ihrer Anwendung auf ein flächig oder räumlich gestaltetes Rohrsystem dargestellt und beschrieben. Es versteht sich, dass ihre Anwendung nicht auf derartige Rohrsysteme beschränkt ist, sondern in allen Fällen einsetzbar ist, bei denen Bauteile leicht und ohne Zuhilfenahme von Werkzeug verbunden und wieder zu lösen sind.

Das Rohrsystem besteht aus Profilrohren **1** gegebenenfalls unterschiedlicher Länge und aus Knotenelementen **2,** mittels deren die Profilrohre lösbar miteinander verbunden werden.

Die Profilrohre **1** können beliebige Querschnittsform aufweisen. In den Figuren ist ein Profilrohr **1** dargestellt, das in seinen Eckbereichen sich durchdringende, längs des Profilrohres **1** verlaufende Nuten **3** aufweist, in die Flächenelemente wie Fachböden oder Wände eingelegt, eingesteckt oder eingehängt werden können. Anstelle dieser Profilrohre können aber auch Rohre, Profile oder Bauteile anderer Form zum Einsatz kommen. Dabei versteht sich, dass mindestens eines der Bauteile Knotenelemente oder Profilrohr in einem engen Winkel verdrehbar sein muss.

An ihren beiden Enden weisen die Profilrohre **1** Kupplungselemente **4** auf, die mit auf sie abgestimmten Kupplungselementen **5** in den Knotenelementen **2** zusammenwirken, um die beiden Bauteile fest, aber auch lösbar miteinander zu verbinden. Bevorzugt sind die Kupplungselemente **4** an den Profilrohren **1** als Zapfen **6** und die Kupplungselemente **5** in den Knotenelementen **2** als Bohrungen **7** ausgebildet.

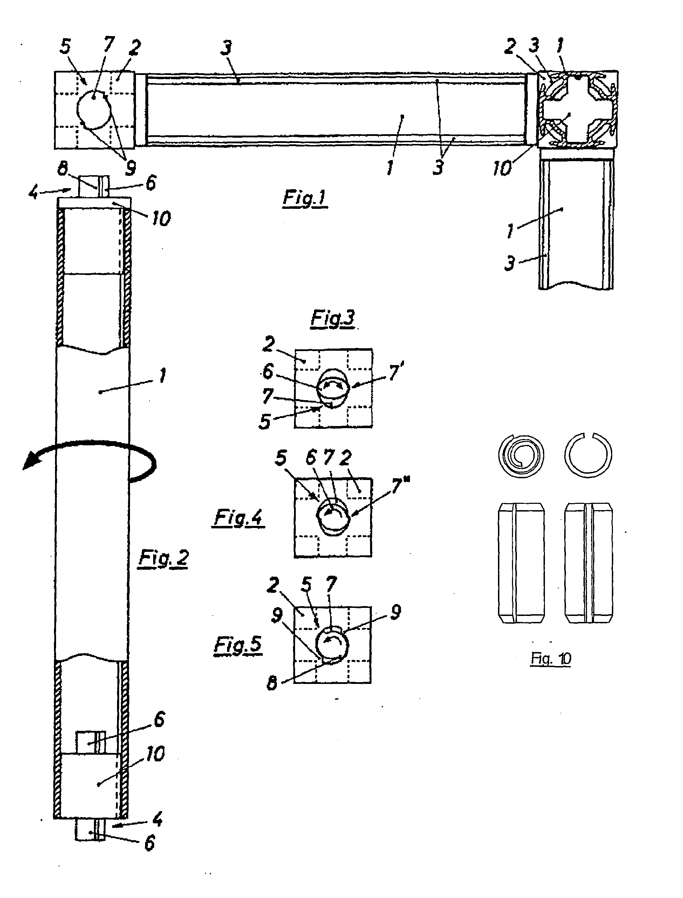

Die Zapfen **6** und die Bohrungen **7** weisen von der reinen Kreisform abweichenden Querschnitt auf. In den Ausführungsformen der Figuren 3 und 4 haben sie im wesentlichen elliptischen Querschnitt. Dabei ist der große Durchmesser des Zapfens größer als der kleine Durchmesser der Bohrung, der Unterschied zwischen dem großen und dem kleinen Durchmesser der Ellipsen ist gering und liegt im 100stel-mm-Bereich. Dadurch kommen zwei ineinander gesteckte Kupplungselemente beim gegenseitigen Verdrehen in selbsthemmenden Reibschluss. Um die Endlage zu sichern, können die Bohrungen **7** in der Ausführungsform der Figur 3 flache Dellen **7'** aufweisen, in die die Zapfen **6** mit ihrem größeren Durchmesser einfallen und gehalten werden.

In der Ausführungsform der Figur 4 sind die Ellipsenhälften gegeneinander verschoben und bilden Anschläge **7",** die die Verdrehbarkeit von Bohrung **7** und Zapfen **6** begrenzen.

Wie aus den Figuren 1 und 5 vorgeht, können die Zapfen **6** auf ihrem Umfang einen oder mehrere keilförmige Nocken **8** besitzen, die von einer gedachten Zylinderfläche allmählich ansteigen und steil wieder auf sie abfallen. Entsprechend weisen die Bohrungen **7** auf die Nocken **8** der Zapfen **6** abgestimmte, nach innen ansteigende Nocken **9** auf. Die Steigung und die Höhe der Nocken **8** und **9** ist hier der Deutlichkeit halber stark überhöht dargestellt, die Steigung beträgt etwa 1:20 bis 1:50. Auch diese Kupplungselemente kommen beim Verdrehen in selbsthemmenden Reibschluss. Diese Ausführungsform erfordert, dass die Orientierung der Steigung der Nocken auf die Drehrichtung abgestellt sein muss und an den beiden Enden eines Profilrohres und dem ihm zugeordneten Knotenelementen unterschiedlich sein müssen und bei Montage diese Unterschiedlichkeit beachtet werden muss.

Die Zapfen **6** sind - wie aus Figur 2 erkennbar - vorzugsweise an Einsatzteilen **10** angeordnet, die in die Enden der Profilrohre **1** drehfest einpressbar sind.

Bei all diesen Ausführungsformen ist der lichte große Durchmesser der Bohrungen **7** geringfügig größer als der große Außendurchmesser der Zapfen **6,** so dass die beiden Kupplungselemente **4** und **5** in einer Fügestellung ineinander geschoben werden können. Wenn dann der Zapfen **6** bzw. das Profilrohr **1,** an dem der Zapfen sitzt, in der in Figur 2 eingezeichneten Pfeilrichtung gedreht wird, verkeilt sich der elliptische Zapfen **6** der Figur 3 bzw. 4 in der elliptischen Bohrung **7** und verbindet Profilrohr **1** und Knotenelement **2** kraftschlüssig und lösbar miteinander. In der Ausführungsform der Figur 5 gleiten die Rückenflächen der Nocken **8** und **9** auf dem Zapfen **6** bzw. in der Bohrung **7** beim Verdrehen des Profilrohres **1** aneinander auf und kommen dabei zunehmend in selbsthemmenden Reibschluß, bis sie das Profilrohr **1** fest, aber wieder lösbar mit dem Knotenelement **2** verbinden. Der Drehwinkel bis zum Aufheben des Fügespaltes und bis zum Erreichen ausreichenden Reibschlusses beträgt hier etwa 15° bis 30°.

Mindestens eines der beiden miteinander in Eingriff kommenden Bauelemente Zapfen **6** und Bohrung **7** im Knotenelement **2** müssen elastisch verformbar sein, um sich beim In-Eingriff-Drehen der Bauteile verformen zu können und dabei unter anderem geringe Drehwinkelunterschiede bis zum festen Sitz der beiden gleichzeitig in Eingriff zu bringenden Kupplungselemente an beiden Enden eines Profilrohrabschnittes auszugleichen. Erfindungsgemäß bestehen beide Bauteile aus einem starren Werkstoff wie Metall, vorzugsweise aus im Druckgußverfahren verarbeitbarem Zink oder Leichtmetall wie Aluminium.

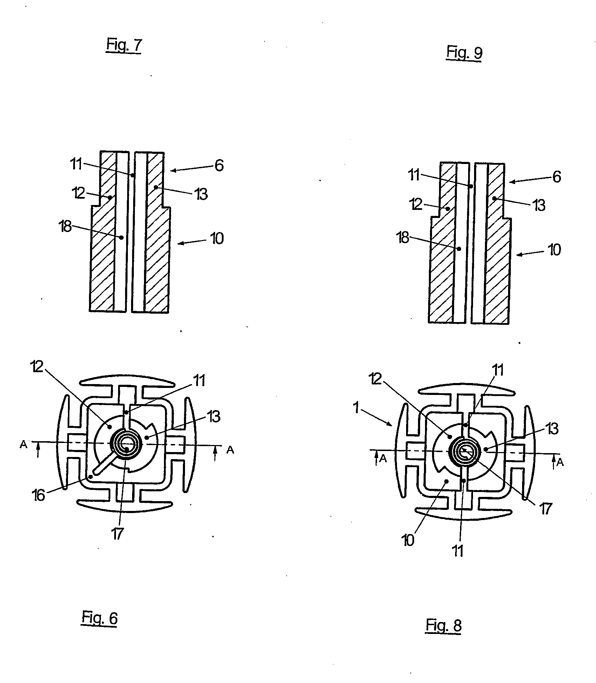

Um mindestens einem der Bauteile, bevorzugt dem Einsatzteil **10,** die erforderliche Elastizität für Verformbarkeit zu verleihen, ist er wie aus den Figuren 6 bis 9 erkennbar mit einem Schlitz **11** versehen, der ihm diese Verformbarkeit gibt. Der Schlitz **11** verläuft längs durch den Zapfen **6** und das ihn tragende Einsatzteil **10** und liegt so, dass er ein Annähern der beiden mit der Bohrung **7** im Knotenelement **2** in Reibschluss kommenden Kontaktbereichen **12** und **13** des Einsatzteiles **10** gestattet. Er kann wie in Figur 8 und 9 in einer Ebene verlaufen, kann jedoch auch wie aus Figur 6 ersichtlich abgewinkelt sein.

Der Schlitz **11** spaltet das Einsatzteil **10** in zwei gesonderte Teile. In der Ausführungsform der Figur 6 sind die beiden Kontaktbereiche **12** und **13** durch einen einem Filmscharnier ähnlichen Steg **16** verbunden.

In dem Schlitz **11** ist ein Federelement **17** angeordnet, das das Verlagern der Kontaktbereiche **12, 13** beim Herbeiführen des Reibschlusses zwischen den Kupplungselementen **4** und **5** erlaubt und die Steifheit des Zapfens **6** erhöht. Dieses Federelement **17** besteht vorzugsweise aus einem Rollstift aus Stahl, also aus einem Stift aus dünnem Stahlblech. Zwei Ausführungen eines derartigen Rollstiftes **17** sind in Figur 10 dargestellt. In der Figur links ist ein sogenannter Spiralspannstift (ISO 8750), mehrlagig gewickelt, vorzugsweise aus Federstahl, im Durchmesser 4mm und Materialstärke von ca. 0,3 mm. Die in der Figur 10 rechts dargestellte Ausführungsform ist ein Schwerspannstift (ISO 8752) im Durchmesser von 4mm und Materialstärke 0,7 - 0,8mm.

Der Außendurchmesser des Rollstiftes **17** ist auf den Innendurchmesser einer im Einsatzteil **10** angebrachten und vom Schlitz **11** durchsetzten, zylindrischen Bohrung **18** abgestellt und wird in diese eingepresst. Er begrenzt so auch die seitliche Verlagerbarkeit der beiden Kontaktbereiche **12, 13** des Zapfens **6.**

Der Rollstift **17** erstreckt sich vom vorderen Ende des Zapfens axial bis in den im Profilrohr **1** montierten Bereich des Einsatzteils **10** hinein, überbrückt so den bruchgefährdeten Bereich am Übergang zwischen Zylinderkeilbolzen und dem im Profil eingepressten Einsatzteil und trägt so zur Steifigkeit und Bruchsicherheit des Einsatzteils bei.

## Patentansprüche

1. Verbindungssystem zwischen Profilrohren über Knotenelemente, mit Kupplungselementen zum lösbaren Verbinden der Profilrohre mit den Knotenelementen, wobei die aufeinander abgestimmten zapfenförmigen bzw. bohrungsförmigen Kupplungselemente ineinander fügbar sind und mit einer Drehbewegung gleichzeitig beidendig eines Profilrohres kraftschlüssig mit einem Knotenelement verbindbar sind, wobei die zapfenförmigen Kupplungselemente (4) jeweils ein endseitig in die Profilrohre einsteckbares Einsatzteil (10) und zwei sich daran anschließende Kontaktbereiche (12,13) umfassen,
**dadurch gekennzeichnet, dass** zwischen den Kontaktbereichen (12, 13) ein sich über die gesamte axiale Länge des Kupplungselementes (4) erstreckender Schlitz (11) vorgesehen ist, und im Schlitz ein Federelement (17) angeordnet ist, das die Kontaktbereiche (12,13) in Eingriff mit den bohrungsförmigen Kupplungselementen (5) drückt, wobei der Schlitz (11) winklig ausgebildet ist und die beiden von der Mittelachse ausgehenden Teilschlitze nur die federnde Kontaktfläche einschliessen und die beiden Kontaktbereiche (12, 13) des Kupplungselementes (6) entlang einer der Kanten des Schlitzes (11) durch ein filmscharnierartiges Gelenk (16) miteinander verbunden sind.

2. Verbindungssystem nach Anspruch 1, **dadurch gekennzeichnet, dass** für die zapfenförmigen Kupplungselemente (4) ein im Druckgussverfahren ausformbares Metall Verwendung findet.

3. Verbindungssystem nach Anspruch 1, **dadurch gekennzeichnet, dass** als Federelement ein aus dünnem Federmaterial gewickelter Rollstift (17) zum Einsatz kommt.

4. Verbindungssystem nach Anspruch 1, **dadurch gekennzeichnet, dass** der Schlitz (11) in einer Axialeabene liegt.

5. Verbindungselement nach Anspruch 1, **dadurch gekennzeichnet, dass** das Federelement (17) sich vom vorderen Ende des Zapfens (6) axial bis in den im Profilrohr (1) montierten Bereich des Einsatzteils (10) hinein erstreckt.

## Claims

1. A connection system for a connection between profiled tubes via node elements, with coupling elements for releasably connecting the profiled tubes to the node elements, wherein the pin-shaped and bore-shaped coupling elements which are adapted to one another can be fitted into one another and can be connected at the same time at both ends of a profiled tube to a node element in a force-fitting manner by means of a rotational movement, wherein the pin-shaped coupling elements (4) each comprise an insert part (10) which can be plugged into the end side of the profiled tubes and two contact regions (12, 13) adjacent thereto,
**characterized in that** between the contact regions (12, 13), a slot (11) is provided which extends over the entire axial length of the coupling element (4) and within the slot, a spring element (17) is arranged which presses the contact regions (12, 13) into engagement with the bore-shaped coupling elements (5), wherein the slot (11) is angularly formed and the partial slots extending from the center axis enclose only the resilient contact surface, and the two contact regions (12, 13) of the coupling element (6) are connected to one another along one of the edges of the slot (11) by a film hinge-like joint (16).

2. The connection system according to claim 1, **characterized in that** for the pin-shaped coupling elements (4), a metal is used which can be molded using the die casting method.

3. The connection system according to claim 1, **characterized in that** a roll pin (17) wound from a thin spring material is used as spring element.

4. The connection system according to claim 1, **characterized in that** the slot (11) lies in an axial plane.

5. A connection element according to claim 1, **characterized in that** the spring element (17) extends axially from the front end of the pin (6) into the region of the insert part (10) mounted in the profiled tube (1).

## Revendications

1. Système d'assemblage entre des tubes profilés au moyen d'éléments nodaux, comprenant des éléments d'accouplement pour l'assemblage séparable des tubes profilés avec les éléments nodaux, sachant que les éléments d'accouplement en forme de broche respectivement d' alésage adaptés l'un à l'autre peuvent être jointés l'un dans l'autre et peuvent être reliés par adhérence des forces à un élément nodal par une rotation parallèlement des deux extrémités d'un tube profilé, sachant que les éléments d'accouplement en forme de broche (4) comprennent respectivement un insert (10) enfichable côté extrémité dans les tubes profilés et deux zones de contact (12, 13) se raccordant dessus,
**caractérisé en ce qu'**entre les zones de contact (12, 13) , une fente (11) s'étendant sur toute la longueur axiale de l'élément d'accouplement (4) est prévue et un élément élastique (17) est placé dans la fente, lequel appuie les zones de contact (12, 13) en prise avec les éléments d'accouplement en forme d'alésage (5), sachant que la fente (11) est angulaire et que les deux fentes partielles partant de l'axe médian enferment uniquement la surface de contact élastique et les deux zones de contact (12, 13) de l'élément d'accouplement (6) sont reliées entre elles le long d'une des arêtes de la fente (11) par une articulation (16) de type lisière intégrale.

2. Système d'assemblage selon la revendication 1, **caractérisé en ce que** pour les éléments d'accouplement en forme de broche (4), on emploie un métal formable par un procédé de coulage sous pression.

3. Système d'assemblage selon la revendication 1, **caractérisé en ce que** pour l'élément élastique, on emploie une goupille tubulaire (17) enroulée en matériau élastique fin.

4. Système d'assemblage selon la revendication 1, **caractérisé en ce que** la fente (11) repose dans un plan axial.

5. Système d'assemblage selon la revendication 1, **caractérisé en ce que** l'élément élastique (17) s'étend vers l'intérieur depuis l'extrémité avant de la broche (6) axialement jusque dans la partie de l'insert (10) montée dans le tube profilé (1).
